# EUROPEAN PATENT APPLICATION

(11) **EP 4 300 625 A1**
(43) Date of publication of application: **03.01.2024**
(21) Application number: 22759463.7
(22) Date of filing: 16.02.2022
(51) Int. Cl.: H01M 4/139, H01G 11/06, H01G 11/24, H01G 11/30, H01G 11/38, H01M 4/13, H01M 4/36, H01M 4/62

(54) **SLURRY COMPOSITION FOR ELECTROCHEMICAL ELEMENT POSITIVE ELECTRODE, ELECTROCHEMICAL ELEMENT POSITIVE ELECTRODE, AND ELECTROCHEMICAL ELEMENT**

(30) Priority: 26.02.2021 JP 2021030959
(71) Applicant: Zeon Corporation, Tokyo 100-8246 (JP)
(72) Inventor: MOTOKI, Junpei, Tokyo 100-8246 (JP)
(74) Representative: Maiwald GmbH
(86) International application number: PCT/JP2022/006235
(87) International publication number: WO 2022/181424

(57) **Abstract**

Provided is a slurry composition for an electrochemical device positive electrode that can form a positive electrode that can reduce IV resistance of an electrochemical device while also causing the electrochemical device to display excellent cycle characteristics and high-temperature storage characteristics. The slurry composition contains composite particles, a binder, and a dispersion medium. The composite particles include positive electrode active material particles and a carbon coating at least partially covering outer surfaces thereof. The amount of the carbon coating in the composite particles is 0.4 parts by mass to 3.5 parts by mass per 100 parts by mass of the positive electrode active material particles. The carbon coating has a Raman spectrum D/G ratio of 0.6 to 1.7. The binder includes a polymer A including a nitrile group-containing monomer unit and an alkylene structural unit and constituting a proportion of 0.05 mass% to 2.0 mass% among all solid content.

## Description

### TECHNICAL FIELD

The present disclosure relates to a slurry composition for an electrochemical device positive electrode, a positive electrode for an electrochemical device, and an electrochemical device.

### BACKGROUND

Electrochemical devices such as lithium ion secondary batteries, electric double-layer capacitors, and lithium ion capacitors have characteristics such as compact size, light weight, high energy-density, and the ability to be repeatedly charged and discharged, and are used in a wide variety of applications.

A positive electrode used in an electrochemical device normally includes a current collector and a positive electrode mixed material layer formed on the current collector. This positive electrode mixed material layer is formed by, for example, applying a slurry composition containing positive electrode active material particles, a binder, and a dispersion medium onto the current collector and then drying the applied slurry composition.

Attempts have previously been made to improve slurry compositions used in the production of positive electrode mixed material layers and components contained in such slurry compositions with the aim of improving device characteristics of electrochemical devices (for example, refer to Patent Literature (PTL) 1).

### CITATION LIST

### Patent Literature

PTL 1: JP2020-30920A

### SUMMARY

### (Technical Problem)

However, there is room for improvement in the conventional technique described above in terms of achieving reduction of IV resistance of an electrochemical device and improvement of cycle characteristics and high-temperature storage characteristics of the electrochemical device in a good balance.

Accordingly, one object of the present disclosure is to provide a slurry composition for an electrochemical device positive electrode that can form a positive electrode that can reduce IV resistance of an electrochemical device while also causing the electrochemical device to display excellent cycle characteristics and high-temperature storage characteristics.

Another object of the present disclosure is to provide a positive electrode for an electrochemical device that can reduce IV resistance of an electrochemical device while also causing the electrochemical device to display excellent cycle characteristics and high-temperature storage characteristics.

Yet another object of the present disclosure is to provide an electrochemical device having low IV resistance and excellent cycle characteristics and high-temperature storage characteristics.

### (Solution to Problem)

The inventor conducted diligent investigation with the aim of solving the problem set forth above. The inventor discovered that reduction of IV resistance of an electrochemical device and improvement of cycle characteristics and high-temperature storage characteristics of the electrochemical device can be achieved in a good balance by forming a positive electrode mixed material layer using a slurry composition that contains composite particles including positive electrode active material particles covered with a carbon coating having a specific property, a binder including a specific polymer A, and a dispersion medium and in which the amount of the carbon coating covering the positive electrode active material particles in the composite particles is within a specific range and the proportion constituted by the polymer A among all solid content is within a specific range. In this manner, the inventor completed the present disclosure.

Specifically, the present disclosure aims to advantageously solve the problem set forth above, and a presently disclosed slurry composition for an electrochemical device positive electrode comprises composite particles, a binder, and a dispersion medium, wherein the composite particles include positive electrode active material particles and a carbon coating that at least partially covers outer surfaces of the positive electrode active material particles, an amount of the carbon coating included in the composite particles is not less than 0.4 parts by mass and not more than 3.5 parts by mass per 100 parts by mass of the positive electrode active material particles, the carbon coating has a ratio of D band peak intensity relative to G band peak intensity in a Raman spectrum of not less than 0.6 and not more than 1.7, the binder includes a polymer A that includes a nitrile group-containing monomer unit and an alkylene structural unit, and the polymer A constitutes a proportion of not less than 0.05 mass% and not more than 2.0 mass% among all solid content. By using the slurry composition set forth above, it is possible to obtain a positive electrode for an electrochemical device that can reduce IV resistance of an electrochemical device while also causing the electrochemical device to display excellent cycle characteristics and high-temperature storage characteristics.

Note that the "amount of a carbon coating" in composite particles referred to in the present disclosure (hereinafter, also referred to as the "amount of coverage") can be measured by a method described in the EXAMPLES section.

Also note that the "ratio of D band peak intensity relative to G band peak intensity in a Raman spectrum" referred to in the present disclosure (hereinafter, also referred to as the "D/G ratio") can be measured by a method described in the EXAMPLES section.

The phrase "includes a monomer unit" as used in the present disclosure means that "a polymer obtained with that monomer includes a repeating unit derived from the monomer".

The phrase "includes an alkylene structural unit" as used in the present disclosure means that "a repeating unit composed of only an alkylene structure represented by a general formula -CₙH₂ₙ- (n is an integer of 2 or more) is included in a polymer". Note that n in the preceding general formula -CₙH₂ₙ-is preferably an integer of 4 or more, and is more preferably 4.

In the presently disclosed slurry composition for an electrochemical device positive electrode, the composite particles preferably have a volume-average particle diameter of less than 20 µm. When the volume-average particle diameter of the composite particles is less than 20 µm, IV resistance of an electrochemical device can be further reduced while also even further improving cycle characteristics and high-temperature storage characteristics of the electrochemical device.

The "volume-average particle diameter" of composite particles referred to in the present disclosure is the particle diameter at a cumulative value of 50% in a particle size distribution (by volume) measured based on a laser scattering/diffraction method using a particle size analyzer (i.e., the 50% volume-average particle diameter (D50)). Also note that the "volume-average particle diameter" of composite particles referred to in the present disclosure can be measured in accordance with JIS Z8825:2013, and, more specifically, can be measured by a method described in the EXAMPLES section.

In the presently disclosed slurry composition for an electrochemical device positive electrode, the composite particles preferably constitute a proportion of not less than 90 mass% and not more than 99 mass% among all solid content. When the proportion constituted by the composite particles among all solid content is within the range set forth above, IV resistance of an electrochemical device can be further reduced while also even further improving cycle characteristics and high-temperature storage characteristics of the electrochemical device.

In the presently disclosed slurry composition for an electrochemical device positive electrode, the binder preferably includes a polymer B other than the polymer A. By using a polymer B in addition to the polymer A as the binder, IV resistance of an electrochemical device can be further reduced while also even further improving cycle characteristics and high-temperature storage characteristics of the electrochemical device.

In the presently disclosed slurry composition for an electrochemical device positive electrode, the polymer B preferably constitutes a proportion of not less than 0.1 mass% and not more than 5 mass% among all solid content. When the proportion constituted by the polymer B among all solid content is within the range set forth above, IV resistance of an electrochemical device can be further reduced while also even further improving cycle characteristics and high-temperature storage characteristics of the electrochemical device.

In addition, the presently disclosed slurry composition for an electrochemical device positive electrode preferably further comprises a conductive material. When the slurry composition further contains a conductive material, IV resistance of an electrochemical device can be further reduced while also even further improving cycle characteristics and high-temperature storage characteristics of the electrochemical device.

In the presently disclosed slurry composition for an electrochemical device positive electrode, the conductive material preferably constitutes a proportion of not less than 0.4 mass% and not more than 5 mass% among all solid content. When the proportion constituted by the conductive material among all solid content is within the range set forth above, IV resistance of an electrochemical device can be further reduced while also even further improving cycle characteristics and high-temperature storage characteristics of the electrochemical device.

Moreover, the present disclosure aims to advantageously solve the problem set forth above, and a presently disclosed positive electrode for an electrochemical device comprises a positive electrode mixed material layer formed using any one of the slurry compositions for an electrochemical device positive electrode set forth above. By using a positive electrode that includes a positive electrode mixed material layer formed from the slurry composition set forth above, it is possible to produce an electrochemical device having low IV resistance and excellent cycle characteristics and high-temperature storage characteristics.

Furthermore, the present disclosure aims to advantageously solve the problem set forth above, and a presently disclosed electrochemical device comprises the positive electrode for an electrochemical device set forth above. An electrochemical device that includes the positive electrode set forth above has low IV resistance and excellent cycle characteristics and high-temperature storage characteristics.

### (Advantageous Effect)

According to the present disclosure, it is possible to provide a slurry composition for an electrochemical device positive electrode that can form a positive electrode that can reduce IV resistance of an electrochemical device while also causing the electrochemical device to display excellent cycle characteristics and high-temperature storage characteristics.

Moreover, according to the present disclosure, it is possible to provide a positive electrode for an electrochemical device that can reduce IV resistance of an electrochemical device while also causing the electrochemical device to display excellent cycle characteristics and high-temperature storage characteristics.

Furthermore, according to the present disclosure, it is possible to provide an electrochemical device having low IV resistance and excellent cycle characteristics and high-temperature storage characteristics.

### DETAILED DESCRIPTION

The following provides a detailed description of embodiments of the present disclosure.

The presently disclosed slurry composition for an electrochemical device positive electrode can be used in formation of a positive electrode mixed material layer of a positive electrode for an electrochemical device.

Moreover, the presently disclosed positive electrode for an electrochemical device can be used as a positive electrode of an electrochemical device such as a lithium ion secondary battery, an electric double-layer capacitor, or a lithium ion capacitor and includes a positive electrode mixed material layer formed using the presently disclosed slurry composition for an electrochemical device positive electrode.

Furthermore, the presently disclosed electrochemical device includes the presently disclosed positive electrode for an electrochemical device.

### (Slurry composition for electrochemical device positive electrode)

The presently disclosed slurry composition contains composite particles including positive electrode active material particles covered with a carbon coating, a polymer A as a binder, and a dispersion medium and optionally contains one or more selected from the group consisting of a polymer B as a binder, a conductive material, and other components.

In the presently disclosed slurry composition, the amount of the carbon coating included in the composite particles is required to be not less than 0.4 parts by mass and not more than 3.5 parts by mass per 100 parts by mass of the positive electrode active material particles and a D/G ratio of the carbon coating is required to be not less than 0.6 and not more than 1.7. In addition, in the presently disclosed slurry composition, the polymer A is required to include a nitrile group-containing monomer unit and an alkylene structural unit and is required to constitute a proportion of not less than 0.05 mass% and not more than 2.0 mass% among all solid content of the slurry composition.

By using the presently disclosed slurry composition, it is possible to obtain a positive electrode for an electrochemical device that can reduce IV resistance of an electrochemical device while also causing the electrochemical device to display excellent cycle characteristics and high-temperature storage characteristics.

### <Composite particles>

The composite particles include positive electrode active material particles and a carbon coating that partially or completely covers outer surfaces of the positive electrode active material particles.

### <<Positive electrode active material particles>>

The positive electrode active material particles are particles formed of a positive electrode active material that gives and receives electrons in a positive electrode of an electrochemical device. In a case in which the electrochemical device is a lithium ion secondary battery, for example, a material that can occlude and release lithium is normally used as the positive electrode active material.

Although the following describes, as one example, a case in which the slurry composition for an electrochemical device positive electrode is a slurry composition for a lithium ion secondary battery positive electrode, the presently disclosed slurry composition for an electrochemical device positive electrode is not limited to the following example.

The positive electrode active material forming the positive electrode active material particles for a lithium ion secondary battery may be a known positive electrode active material such as lithium-containing cobalt oxide (lithium cobalt oxide, LiCoO₂), lithium manganate (LiMn₂O₄), lithium-containing nickel oxide (LiNiO₂), a lithium-containing complex oxide of Co-Ni-Mn (Li(Co Mn Ni)O₂), a lithium-containing complex oxide of Ni-Mn-Al, a lithium-containing complex oxide of Ni-Co-Al, a phosphate compound having an olivine structure represented by LiMPO₄ (M is one or more selected from the group consisting of Fe, Mn, Ni, Co, Cu, Sc, Ti, Cr, V, and Zn) (for example, olivine-type lithium iron phosphate (LiFePO₄) or olivine-type lithium manganese phosphate (LiMnPO₄)), a Li₂MnO₃-LiNiO₂-based solid solution, a lithium-rich spinel compound represented by Lii+ₓMn₂₋ₓO₄ (0 < x < 2), Li[Ni_{0.17}Li_{0.2}Co_{0.07}Mn_{0.56}]O₂, or LiNi_{0.5}Mn_{1.5}O₄ without any specific limitations. One of these positive electrode active materials may be used individually, or two or more of these positive electrode active materials may be used in combination in a freely selected ratio.

Of these examples, phosphate compounds having an olivine structure are preferable as positive electrode active materials having particularly good safety, with LiFePO₄ being more preferable. Note that positive electrode active material particles formed of a phosphate compound having an olivine structure typically have a drawback of poor electrical conductivity. However, since the positive electrode active material particles are used in the form of composite particles covered with a carbon coating in the present disclosure, the positive electrode active material particles can display sufficiently good electrical conductivity as composite particles through the contribution of the carbon coating even in a case in which a phosphate compound having an olivine structure is adopted as the positive electrode active material forming the positive electrode active material particles. Consequently, reduction of IV resistance of an electrochemical device and improvement of cycle characteristics and high-temperature storage characteristics of the electrochemical device can be achieved well.

No specific limitations are placed on the method by which the positive electrode active material particles are produced, and a known method can be adopted.

### <<Carbon coating>>

The carbon coating is a coating that is formed of carbon and that partially or completely covers outer surfaces of the positive electrode active material particles described above.

The D/G ratio of the carbon coating is required to be not less than 0.6 and not more than 1.7 as previously described, is preferably 0.7 or more, more preferably 0.8 or more, and even more preferably 0.9 or more, and is preferably 1.5 or less, more preferably 1.2 or less, and even more preferably 1.1 or less.

The D/G ratio is an indicator that is typically used to evaluate the quality of a carbon material. In a Raman spectrum of a carbon material measured using a Raman spectrometer, vibration modes referred to as the G band (around 1600 cm⁻¹) and the D band (around 1350 cm⁻¹) are observed. The G band is a vibration mode based on hexagonal lattice structure of graphite and the D band is a vibration mode based on amorphous locations. Accordingly, a carbon coating having a high peak intensity ratio for the D band and the G band (D/G ratio) can be said to have a large number of amorphous locations (i.e., defect structures). Based on studies conducted by the inventor, it is presumed that the polymer A including a nitrile group-containing monomer unit and an alkylene structural unit can adsorb well to the composite particles with these defect structures as adsorption sites. Through good adsorption of the polymer A to the composite particles via defect structures in the carbon coating, interactions between the composite particles (between the positive electrode active material particles) weaken, and the composite particles can be dispersed well in the slurry composition. Consequently, IV resistance of an electrochemical device can be reduced while also enhancing cycle characteristics of the electrochemical device. In other words, IV resistance of an electrochemical device decreases and cycle characteristics of the electrochemical device are lost when the D/G ratio of the carbon coating is less than 0.6.

On the other hand, studies conducted by the inventor have revealed that cycle characteristics and high-temperature storage characteristics deteriorate when there are too many defect structures in the carbon coating, which is presumed to be due to electrolyte solution reacting with these defect structures and decomposing inside of an electrochemical device. In other words, cycle characteristics and high-temperature storage characteristics of an electrochemical device are lost when the D/G ratio of the carbon coating is more than 1.7.

### <<Amount of coverage>>

The amount of the carbon coating covering the positive electrode active material particles per 100 parts by mass of the positive electrode active material particles is required to be not less than 0.4 parts by mass and not more than 3.5 parts by mass as previously described, is preferably 0.6 parts by mass or more, more preferably 0.8 parts by mass or more, and even more preferably 0.9 parts by mass or more, and is preferably 2.5 parts by mass or less, more preferably 1.5 parts by mass or less, and even more preferably 1.2 parts by mass or less. Electrical conductivity of the composite particles decreases when the amount of coverage is less than 0.4 parts by mass per 100 parts by mass of the positive electrode active material particles. Consequently, IV resistance of an electrochemical device cannot be sufficiently reduced, and cycle characteristics of the electrochemical device are lost. On the other hand, high-temperature storage characteristics deteriorate when the amount of coverage is more than 3.5 parts by mass per 100 parts by mass of the positive electrode active material particles, which is presumed to be due to the relative amount of the polymer A compared to the carbon coating decreasing and it becoming easier for a side reaction to occur between the composite particles and electrolyte solution during storage. In addition, IV resistance of an electrochemical device cannot be sufficiently reduced.

### <<Production method of composite particles>>

No specific limitations are placed on the method by which the positive electrode active material particles are covered by the carbon coating to produce the composite particles. For example, the composite particles can be produced through a step of mixing the positive electrode active material particles and a carbon source in the presence of a solvent to produce a slurry for composite particles (slurry production step), a step of drying the slurry for composite particles to obtain granulated particles (granulation step), and a step of performing heat treatment of the granulated particles (heating step).

### [Slurry production step]

In the slurry production step, the positive electrode active material particles, a carbon source, and a solvent are mixed to produce a slurry for composite particles.

The carbon source can be any material that can serve as a material of a carbon coating without any specific limitations. For example, a polymer formed of carbon atoms, hydrogen atoms, and oxygen atoms is preferably used. Examples of such polymers include polyvinyl alcohol and lactose. Note that one carbon source may be used individually, or two or more carbon sources may be used in combination in a freely selected ratio.

The solvent is not specifically limited so long as it enables dispersion of the positive electrode active material particles while also enabling dispersion and/or dissolution of the carbon source, but is preferably water. Note that one solvent may be used individually, or two or more solvents may be used in combination in a freely selected ratio.

The mixing ratio of the positive electrode active material particles and the carbon source is not specifically limited and should be adjusted as appropriate in accordance with the expected amount of coverage in the obtained composite particles. For example, the amount of the carbon source that is used can be set as not less than 0.1 parts by mass and not more than 16 parts by mass per 100 parts by mass of the positive electrode active material particles.

No specific limitations are placed on the method by which the positive electrode active material particles and the carbon source are mixed in the presence of the solvent, and a known mixing device such as a bead mill can be used.

### [Granulation step]

In the granulation step, the slurry for composite particles that has been obtained in the slurry production step is dried to remove the solvent and obtain granulated particles.

The method of drying and granulation in the granulation step is not specifically limited so long as the expected granulated particles can be obtained, and spray granulation can preferably be used. The drying temperature in the granulation step is not specifically limited but is preferably 100°C or higher, and more preferably 150°C or higher, and is preferably 250°C or lower, and more preferably 200°C or lower.

No specific limitations are placed on the device used in the spray granulation, and a known spray dryer can be used.

### [Heating step]

In the heating step, the granulated particles that have been obtained in the granulation step are subjected to heat treatment.

By controlling the heating temperature and the heating time in the heat treatment, it is possible to control the D/G ratio of the carbon coating that is included in the resultant composite particles. Specifically, raising the heating temperature increases the crystallinity of the carbon coating and lowers the D/G ratio, whereas lowering the heating temperature increases defect structures in the carbon coating and raises the D/G ratio. Moreover, lengthening the heating time increases the crystallinity of the carbon coating and lowers the D/G ratio, whereas shortening the heating time increases defect structures in the carbon coating and raises the D/G ratio.

From a viewpoint of good formation of a carbon coating having the excepted D/G ratio, the heating temperature is preferably 500°C or higher, more preferably 600°C or higher, and even more preferably 700°C or higher, and is preferably 1000°C or lower, more preferably 900°C or lower, and even more preferably 800°C or lower. In addition, from a viewpoint of good formation of a carbon coating having the expected D/G ratio, the heating time is preferably 10 minutes or more, more preferably 30 minutes or more, and even more preferably 50 minutes or more, and is preferably 120 minutes or less, more preferably 100 minutes or less, and even more preferably 70 minutes or less.

No specific limitations are placed on the device that is used in the heat treatment, and a known heating device can be used.

### «Volume-average particle diameter»

The volume-average particle diameter of the composite particles is preferably less than 20 µm, more preferably less than 10 µm, and even more preferably less than 5 µm. When the volume-average particle diameter of the composite particles is less than 20 µm, IV resistance of an electrochemical device can be further reduced while also even further improving cycle characteristics and high-temperature storage characteristics of the electrochemical device.

Moreover, the volume-average particle diameter of the composite particles is preferably 0.1 µm or more, and more preferably 0.5 µm or more. When the volume-average particle diameter of the composite particles is 0.1 µm or more, viscosity stability of the slurry composition can be ensured.

Note that in the slurry composition, the composite particles may be primary particles or may be secondary particles resulting from association of a plurality of primary particles.

The volume-average particle diameter of the composite particles can be controlled by altering the particle diameter of the positive electrode active material particles used to produce the composite particles or by altering the used amount of the carbon source or the granulation conditions in the production method of the composite particles described above.

### «Proportional content»

The proportion constituted by the composite particles among all solid content in the presently disclosed slurry composition when all solid content is taken to be 100 mass% is preferably 90 mass% or more, more preferably 91 mass% or more, and even more preferably 92 mass% or more, and is preferably 99 mass% or less, more preferably 98 mass% or less, and even more preferably 97 mass% or less. When the proportion constituted by the composite particles among all solid content of the slurry composition is within any of the ranges set forth above, IV resistance of an electrochemical device can be further reduced while also even further improving cycle characteristics and high-temperature storage characteristics of the electrochemical device.

### <Binder>

The slurry composition contains at least the polymer A as a binder and optionally contains a polymer (polymer B) that does not correspond to the polymer A as a binder.

### «Polymer A»

The polymer A includes at least a nitrile group-containing monomer unit and an alkylene structural unit, and optionally includes other repeating units.

### [Nitrile group-containing monomer unit]

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Note that one nitrile group-containing monomer may be used individually, or two or more nitrile group-containing monomers may be used in combination in a freely selected ratio. Of these nitrile group-containing monomers, acrylonitrile is preferable.

The proportional content of nitrile group-containing monomer units in the polymer A when all repeating units in the polymer A are taken to be 100 mass% is preferably 20 mass% or more, more preferably 25 mass% or more, and even more preferably 30 mass% or more, and is preferably 55 mass% or less, more preferably 50 mass% or less, and even more preferably 45 mass% or less. When the proportional content of nitrile group-containing monomer units in the polymer A is 20 mass% or more, solubility in the dispersion medium (for example, N-methyl-2-pyrrolidone) of the slurry composition is sufficiently ensured. On the other hand, when the proportional content of nitrile group-containing monomer units in the polymer A is 55 mass% or less, excessive runoff of the polymer A into electrolyte solution can be inhibited. Moreover, when the proportional content of nitrile group-containing monomer units in the polymer A is within any of the ranges set forth above, IV resistance of an electrochemical device can be further reduced while also even further improving cycle characteristics and high-temperature storage characteristics of the electrochemical device. Furthermore, viscosity stability of the slurry composition can be ensured.

Note that the proportional contents of monomer units and structural units (inclusive of subsequently described "hydrogenated units") in a polymer referred to in the present disclosure can be measured by a nuclear magnetic resonance (NMR) method such as ¹H-NMR or ¹³C-NMR.

### [Alkylene structural unit]

Although the alkylene structural unit may be linear or branched, the alkylene structural unit is preferably linear (i.e., is preferably a linear alkylene structural unit) from a viewpoint of further reducing IV resistance of an electrochemical device while also even further improving cycle characteristics and high-temperature storage characteristics of the electrochemical device.

Examples of methods by which an alkylene structural unit can be introduced into the polymer A include, but are not specifically limited to, the following methods (1) and (2).
(1) A method in which a polymer is produced from a monomer composition containing a conjugated diene monomer and then the polymer is hydrogenated so as to convert a conjugated diene monomer unit to an alkylene structural unit
(2) A method in which a polymer is produced from a monomer composition containing a 1-olefin monomer
   Of these methods, method (1) is preferable in terms of ease of production of the polymer A.

The conjugated diene monomer may be a conjugated diene compound having a carbon number of 4 or more such as 1,3-butadiene, isoprene, 2,3-dimethyl-1,3-butadiene, or 1,3-pentadiene, for example. Of these conjugated diene compounds, 1,3-butadiene is preferable. In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene monomer unit (i.e., is more preferably a hydrogenated 1,3-butadiene unit).

The 1-olefin monomer may be ethylene, propylene, 1-butene, or the like, for example.

One of these conjugated diene monomers or 1-olefin monomers may be used individually, or two or more of these conjugated diene monomers or 1-olefin monomers may be used in combination in a freely selected ratio.

The proportional content of alkylene structural units in the polymer A when all repeating units in the polymer A are taken to be 100 mass% is preferably 35 mass% or more, more preferably 45 mass% or more, and even more preferably 55 mass% or more, and is preferably 80 mass% or less, and more preferably 70 mass% or less. When the proportional content of alkylene structural units in the polymer A is 35 mass% or more, excessive runoff of the polymer A into electrolyte solution can be inhibited. On the other hand, when the proportional content of alkylene structural units in the polymer A is 80 mass% or less, solubility in the dispersion medium (for example, N-methyl-2-pyrrolidone) of the slurry composition is sufficiently ensured. Moreover, when the proportional content of alkylene structural units in the polymer A is within any of the ranges set forth above, IV resistance of an electrochemical device can be further reduced while also even further improving cycle characteristics and high-temperature storage characteristics of the electrochemical device. Furthermore, viscosity stability of the slurry composition can be ensured.

Note that in a case in which the polymer A is a hydrogenated polymer resulting from hydrogenation of a polymer that is obtained through polymerization of a monomer composition containing a conjugated diene monomer as previously described, the hydrogenated polymer can include a non-hydrogenated conjugated diene monomer unit in addition to an alkylene structural unit. In this case, the total proportional content of alkylene structural units and non-hydrogenated conjugated diene monomer units (hereinafter, referred to as the "proportional content of conjugated diene monomer-derived repeating units") in the polymer A when all repeating units in the polymer A are taken to be 100 mass% is preferably 35 mass% or more, more preferably 45 mass% or more, and even more preferably 55 mass% or more, and is preferably 80 mass% or less, and more preferably 70 mass% or less. When the proportional content of conjugated diene monomer-derived repeating units in the polymer A is 35 mass% or more, excessive runoff of the polymer A into electrolyte solution can be inhibited. On the other hand, when the proportional content of conjugated diene monomer-derived repeating units in the polymer A is 80 mass% or less, solubility in the dispersion medium (for example, N-methyl-2-pyrrolidone) of the slurry composition is sufficiently ensured. Moreover, when the proportional content of conjugated diene monomer-derived repeating units in the polymer A is within any of the ranges set forth above, IV resistance of an electrochemical device can be further reduced while also even further improving cycle characteristics and high-temperature storage characteristics of the electrochemical device. Furthermore, viscosity stability of the slurry composition can be ensured.

### [Other repeating units]

Examples of other repeating units that can be included in the polymer A include, but are not specifically limited to, an aromatic vinyl monomer unit, an acidic group-containing monomer unit, and a (meth)acrylic acid ester monomer unit. The polymer A may include one type of other repeating unit or may include two or more types of other repeating units.

Note that in the present disclosure, "(meth)acryl" is used to indicate "acryl" and/or "methacryl".

Examples of aromatic vinyl monomers that can form an aromatic vinyl monomer unit include styrene, α-methylstyrene, p-t-butylstyrene, butoxystyrene, vinyltoluene, chlorostyrene, and vinylnaphthalene. Note that one aromatic vinyl monomer may be used individually, or two or more aromatic vinyl monomers may be used in combination in a freely selected ratio. Of these aromatic vinyl monomers, styrene is preferable.

In a case in which the polymer A includes an aromatic vinyl monomer unit, the proportional content of aromatic vinyl monomer units in the polymer A when all repeating units in the polymer A are taken to be 100 mass% is preferably 10 mass% or more, and more preferably 20 mass% or more, and is preferably 70 mass% or less, more preferably 60 mass% or less, and even more preferably 50 mass% or less from a viewpoint of further reducing IV resistance of an electrochemical device while also even further improving cycle characteristics and high-temperature storage characteristics of the electrochemical device.

Examples of acidic group-containing monomers that can form an acidic group-containing monomer unit include carboxy group-containing monomers, sulfo group-containing monomers, and phosphate group-containing monomers. Note that one acidic group-containing monomer may be used individually, or two or more acidic group-containing monomers may be used in combination in a freely selected ratio.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-transaryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

An acid anhydride that produces a carboxy group through hydrolysis can also be used as a carboxy group-containing monomer. Of these examples, acrylic acid and methacrylic acid are preferable as carboxy group-containing monomers.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate.

Note that in the present disclosure, "(meth)acryloyl" is used to indicate "acryloyl" and/or "methacryloyl".

In a case in which the polymer A includes an acidic group-containing monomer unit, the proportional content of acidic group-containing monomer units in the polymer A when all repeating units in the polymer A are taken to be 100 mass% is preferably 1 mass% or more, and more preferably 3 mass% or more, and is preferably 10 mass% or less, and more preferably 7 mass% or less from a viewpoint of further reducing IV resistance of an electrochemical device while also even further improving cycle characteristics and high-temperature storage characteristics of the electrochemical device.

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Note that one (meth)acrylic acid ester monomer may be used individually, or two or more (meth)acrylic acid ester monomers may be used in combination in a freely selected ratio.

In a case in which the polymer A includes a (meth)acrylic acid ester monomer unit, the proportional content of (meth)acrylic acid ester monomer units in the polymer A when all repeating units in the polymer A are taken to be 100 mass% is preferably 10 mass% or more, more preferably 20 mass% or more, and even more preferably 30 mass% or more, and is preferably 70 mass% or less, more preferably 60 mass% or less, and even more preferably 50 mass% or less from a viewpoint of further reducing IV resistance of an electrochemical device while also even further improving cycle characteristics and high-temperature storage characteristics of the electrochemical device.

### [Production method of polymer A]

No specific limitations are placed on the method by which the polymer A is produced. For example, the polymer A may be produced by polymerizing a monomer composition containing the monomers described above in an aqueous solvent and then optionally performing hydrogenation. Note that the proportional content of each monomer in the monomer composition can be set in accordance with the desired proportional content of each repeating unit (monomer unit and/or structural unit) in the polymer.

Although the polymerization method is not specifically limited, a method such as solution polymerization, suspension polymerization, bulk polymerization, or emulsion polymerization may be used. Moreover, ionic polymerization, radical polymerization, living radical polymerization, various types of condensation polymerization, addition polymerization, and so forth can be adopted as the polymerization reaction. Furthermore, a known emulsifier and/or polymerization initiator may be used in the polymerization as necessary. The hydrogenation can be performed by a known method.

### [Proportional content]

The proportion constituted by the polymer A among all solid content in the presently disclosed slurry composition when all solid content is taken to be 100 mass% is required to be not less than 0.05 mass% and not more than 2.0 mass% as previously described, is preferably 0.1 mass% or more, and more preferably 0.15 mass% or more, and is preferably 1.0 mass% or less, more preferably 0.5 mass% or less, and even more preferably 0.35 mass% or less. High-temperature storage characteristics deteriorate when the proportion constituted by the polymer A among all solid content of the slurry composition is less than 0.05 mass%, which is presumed to be due to the relative amount of the polymer A compared to the carbon coating decreasing and it becoming easier for a side reaction to occur between the composite particles and electrolyte solution during storage. In addition, IV resistance of an electrochemical device cannot be sufficiently reduced. On the other hand, when the proportion constituted by the polymer A among all solid content of the slurry composition is more than 2.0 mass%, IV resistance decreases due to an increased amount of the polymer A acting as a resistive component, and cycle characteristics are lost.

### «Polymer B»

Any polymer that does not correspond to the polymer A and that can display binding capacity inside of an electrochemical device may be used without any specific limitations as the polymer B. For example, a polymer including mainly (meth)acrylic acid ester monomer units (acrylic polymer) or a polymer including mainly fluorine-containing monomer units (fluoropolymer) may be used as such a polymer B. One of these polymers may be used individually, or two or more of these polymers may be used in combination in a freely selected ratio. Of these polymers, a fluoropolymer is preferable from a viewpoint of further reducing IV resistance of an electrochemical device while also even further improving cycle characteristics and high-temperature storage characteristics of the electrochemical device, and polyvinylidene fluoride is more preferable.

Note that when a polymer is said to "include mainly" certain monomer units in the present disclosure, this means that "the proportional content of these monomer units is more than 50 mass% when the amount of all repeating units included in the polymer is taken to be 100 mass%".

No specific limitations are placed on the method by which the polymer B is produced, and any of the same methods as for the polymer A described above can be adopted.

The proportion constituted by the polymer B among all solid content in the presently disclosed slurry composition when all solid content is taken to be 100 mass% is preferably 0.1 mass% or more, more preferably 0.5 mass% or more, and even more preferably 1 mass% or more, and is preferably 5 mass% or less, more preferably 4 mass% or less, and even more preferably 3 mass% or less. When the proportion constituted by the polymer B among all solid content of the slurry composition is within any of the ranges set forth above, IV resistance of an electrochemical device can be further reduced while also even further improving cycle characteristics and high-temperature storage characteristics of the electrochemical device.

### <Dispersion medium>

The dispersion medium of the slurry composition may be water or an organic solvent, but is preferably an organic solvent. Examples of organic solvents that can be used include acetonitrile, N-methylpyrrolidone, acetylpyridine, cyclopentanone, N,N-dimethylacetamide, dimethylformamide, dimethyl sulfoxide, methylformamide, methyl ethyl ketone, furfural, and ethylenediamine. Of these organic solvents, N-methyl-2-pyrrolidone (NMP) is preferable from a viewpoint of ease of handling, safety, and ease of synthesis.

Note that one dispersion medium may be used individually, or two or more dispersion mediums may be used in combination in a freely selected ratio.

### <Conductive material>

The conductive material that is optionally contained in the presently disclosed slurry composition is not specifically limited so long as it is a material that can ensure electrical contact among the positive electrode active material particles in a positive electrode mixed material layer formed from the slurry composition, but is preferably a carbon material.

The carbon material may be carbon black (for example, acetylene black, Ketjenblack^{®} (Ketjenblack is a registered trademark in Japan, other countries, or both), or furnace black); graphite; carbon flake; or a fibrous carbon material such as carbon nanofiber, carbon nanotubes (CNTs), or vapor-grown carbon fiber. One of these materials may be used individually, or two or more of these materials may be used in combination in a freely selected ratio. Note that the CNTs may be single-walled carbon nanotubes, may be multi-walled carbon nanotubes, or may be a mixture of single-walled carbon nanotubes and multi-walled carbon nanotubes.

The proportion constituted by the conductive material among all solid content in the presently disclosed slurry composition when all solid content is taken to be 100 mass% is preferably 0.4 mass% or more, more preferably 0.7 mass% or more, and even more preferably 1 mass% or more, and is preferably 5 mass% or less, more preferably 4 mass% or less, and even more preferably 3 mass% or less. When the proportion constituted by the conductive material among all solid content of the slurry composition is within any of the ranges set forth above, IV resistance of an electrochemical device can be further reduced while also even further improving cycle characteristics and high-temperature storage characteristics of the electrochemical device.

### <Other components>

Examples of other components that are optionally contained in the presently disclosed slurry composition include known components such as reinforcing materials, antioxidants, rheology modifiers, and additives for electrolyte solution having a function of inhibiting electrolyte solution decomposition.

Note that one other component may be used individually, or two or more other components may be used in combination in a freely selected ratio.

### <Production method of slurry composition for electrochemical device positive electrode>

The presently disclosed slurry composition can be produced by mixing the components described above. Specifically, the slurry composition can be produced by mixing the components described above using a mixer such as a ball mill, a sand mill, a bead mill, a pigment disperser, a grinding machine, an ultrasonic disperser, a homogenizer, a planetary mixer, or a FILMIX.

### (Positive electrode for electrochemical device)

The presently disclosed positive electrode for an electrochemical device includes a positive electrode mixed material layer formed using the presently disclosed slurry composition for an electrochemical device positive electrode set forth above. For example, the presently disclosed positive electrode may include a current collector and a positive electrode mixed material layer formed on the current collector, wherein the positive electrode mixed material layer is a dried product of the presently disclosed slurry composition for an electrochemical device positive electrode. Note that the presently disclosed positive electrode for an electrochemical device may optionally include other layers (for example, an adhesive layer and/or a porous membrane layer) besides the positive electrode mixed material layer. The presently disclosed positive electrode for an electrochemical device can be used as a positive electrode of an electrochemical device such as a lithium ion secondary battery, an electric double-layer capacitor, or a lithium ion capacitor.

By using the presently disclosed positive electrode, it is possible to produce an electrochemical device having low IV resistance and excellent cycle characteristics and high-temperature storage characteristics.

### <Current collector>

The current collector included in the positive electrode for an electrochemical device is not specifically limited so long as it is a material having electrical conductivity and electrochemical durability and should be selected as appropriate depending on the type of electrochemical device. In a case in which the positive electrode for an electrochemical device is a positive electrode for a lithium ion secondary battery, the material forming the current collector may be iron, copper, aluminum, nickel, stainless steel, titanium, tantalum, gold, platinum, or the like. Of these materials, aluminum foil is particularly preferable as the material forming the current collector used in the positive electrode.

Note that one of these materials may be used individually, or two or more of these materials may be used in combination in a freely selected ratio.

### <Positive electrode mixed material layer>

The positive electrode mixed material layer that is formed using the presently disclosed slurry composition may be a dried product of the presently disclosed slurry composition, for example. In other words, the positive electrode mixed material layer contains at least the composite particles and the polymer A, and optionally contains one or more selected from the group consisting of the polymer B, the conductive material, and other components.

Note that since components contained in the positive electrode mixed material layer are components that were contained in the presently disclosed slurry composition, the proportion constituted by a certain component (excluding the dispersion medium) in the positive electrode mixed material layer is normally the same as the proportion constituted by that component among all solid content in the presently disclosed slurry composition.

### <Production method of positive electrode for electrochemical device>

No specific limitations are placed on the method by which the positive electrode for an electrochemical device is produced. For example, the positive electrode for an electrochemical device may be produced through a step of applying the slurry composition onto at least one side of the current collector (application step) and a step of drying the slurry composition that has been applied onto at least one side of the current collector to form a positive electrode mixed material layer on the current collector (drying step).

### «Application step»

The slurry composition may be applied onto the current collector by any commonly known method without any specific limitations. Specific examples of application methods that can be used include doctor blading, dip coating, reverse roll coating, direct roll coating, gravure coating, extrusion coating, and brush coating. The thickness of the slurry coating on the current collector after application but before drying can be set as appropriate in accordance with the thickness of the positive electrode mixed material layer to be obtained through drying.

### <<Drying step>>

The slurry composition on the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, it is possible to form a positive electrode mixed material layer on the current collector and obtain a positive electrode for an electrochemical device that includes the current collector and the positive electrode mixed material layer.

After the drying step, the positive electrode mixed material layer may be further subjected to a pressing process such as mold pressing or roll pressing. The pressing process can improve close adherence of the positive electrode mixed material layer and the current collector.

### (Electrochemical device)

A feature of the presently disclosed electrochemical device is that it includes the positive electrode for an electrochemical device set forth above. The presently disclosed electrochemical device may be, but is not specifically limited to, a lithium ion secondary battery, an electric double-layer capacitor, or a lithium ion capacitor, for example, and is preferably a lithium ion secondary battery. The presently disclosed electrochemical device has low IV resistance and excellent cycle characteristics and high-temperature storage characteristics as a result of including the presently disclosed positive electrode.

Although the following describes, as one example, a case in which the electrochemical device is a lithium ion secondary battery, the presently disclosed electrochemical device is not limited to the following example. A lithium ion secondary battery that is an example of the presently disclosed electrochemical device normally includes electrodes (positive electrode and negative electrode), an electrolyte solution, and a separator, and has the presently disclosed positive electrode for an electrochemical device as the positive electrode.

### <Negative electrode>

Examples of negative electrodes that can be used in the lithium ion secondary battery that is an example of the presently disclosed electrochemical device include known negative electrodes without any specific limitations. Specifically, a negative electrode obtained by forming a negative electrode mixed material layer on a current collector such as copper foil by a known production method can be used as the negative electrode.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and is, for example, preferably 0.5 mass% to 15 mass%, more preferably 2 mass% to 13 mass%, and even more preferably 5 mass% to 10 mass%. Known additives such as vinylene carbonate, fluoroethylene carbonate, and ethyl methyl sulfone may be added to the electrolyte solution.

### <Separator>

Examples of separators that can be used include, but are not specifically limited to, those described in JP2012-204303A. Of these separators, a microporous membrane formed of polyolefinic (polyethylene, polypropylene, polybutene, or polyvinyl chloride) resin is preferred since such a membrane can reduce the total thickness of the separator, which increases the ratio of electrode active material particles in the lithium ion secondary battery, and consequently increases the volumetric capacity. Moreover, a functional layer-equipped separator that has a functional layer (porous membrane layer or adhesive layer) at one side or both sides of a separator substrate may be used as the separator.

### <Production method of lithium ion secondary battery>

The lithium ion secondary battery in accordance with the present disclosure can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure or evaluate the volume-average particle diameter of composite particles, the amount of a carbon coating (amount of coverage) in composite particles, the D/G ratio of a carbon coating, and the IV resistance, cycle characteristics, and high-temperature storage characteristics of an electrochemical device.

### <Volume-average particle diameter>

Dry measurement of the volume-average particle diameter of composite particles was performed in accordance with JIS Z8825:2013 using a laser diffraction/scattering particle size analyzer (Microtrac MT-3300EXII produced by MicrotracBEL Corp.) without dispersing the particles using compressed air.

### <Amount of coverage>

The amount of a carbon coating (amount of coverage) was measured for composite particles using a carbon analyzer (Carbon/Sulfur Analyzer EMIA-920V2 produced by Horiba, Ltd.).

### <D/G ratio>

The D/G ratio of a carbon coating was measured for composite particles by Raman spectroscopy (SENTERRA Raman Microscope produced by Bruker Optics) at an excitation wavelength of 532 nm with a sample fixed under glass.

### <IV resistance>

A lithium ion secondary battery was charged to an SOC (State Of Charge) of 50% at 1C (C is a value expressed by rated capacity (mA)/1 h (h)) in a 25°C atmosphere. Next, 20 seconds of charging and 20 seconds of discharging centered on an SOC of 50% were performed at each of 0.5C, 1.0C, 1.5C, and 2.0C. The battery voltage after 20 seconds in each of these cases (charging side and discharging side) was plotted against the current value, and the gradient of this plot was determined as the IV resistance (Ω) (IV resistance during charging and IV resistance during discharging). The obtained IV resistance value (Ω) was evaluated by the following standard. A smaller IV resistance value indicates less internal resistance.
A: IV resistance of less than 2.0 Ω
B: IV resistance of not less than 2.0 Ω and less than 2.3 Ω
C: IV resistance of not less than 2.3 Ω and less than 2.5 Ω
D: IV resistance of not less than 2.5 Ω and less than 3.0 Ω
E: IV resistance of 3.0 Ω or more

### <Cycle characteristics>

A lithium ion secondary battery was left at rest for 5 hours at a temperature of 25°C after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging (upper limit cell voltage 4.20 V) was performed by a 0.2C constant-current method and CC discharging was performed to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 45°C. The discharge capacity of the 1^{st} cycle was defined as X1, and the discharge capacity of the 100^{th} cycle was defined as X2. A capacity change rate expressed by ΔC = (X2/X1) × 100(%) was determined using the discharge capacity X1 and the discharge capacity X2 and was evaluated by the following standard. A larger value for the capacity change rate ΔC indicates better cycle characteristics.
A: ΔC of 93% or more
B: ΔC of not less than 90% and less than 93%
C: ΔC of not less than 87% and less than 90%
D: ΔC of less than 87%

### <High-temperature storage characteristics>

A lithium ion secondary battery was left at rest for 5 hours at a temperature of 25°C after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging (upper limit cell voltage 4.20 V) was performed with a 0.2C constant current and CC discharging was performed to a cell voltage of 3.00 V with a 0.2C constant current. This charging and discharging at 0.2C was repeated three times. The discharge capacity of the 3^{rd} cycle at 0.2C was taken to be the initial capacity Cx. Thereafter, CC-CV charging (upper limit cell voltage 4.20 V) was performed with a 0.2C constant current. Next, the lithium ion secondary battery was stored for 4 weeks in an inert oven having the inside of a treatment chamber set as a nitrogen atmosphere of 60°C. The lithium ion secondary battery was subsequently discharged to a cell voltage of 3.00 V by a 0.2C constant-current method, and the discharge capacity at that time was taken to be Cy. A high-temperature capacity maintenance rate expressed by (Cy/Cx) × 100(%) was determined and was evaluated by the following standard. A larger value for this high-temperature capacity maintenance rate indicates less battery degradation during high-temperature storage (i.e., better high-temperature storage characteristics).
A: High-temperature capacity maintenance rate of 80% or more
B: High-temperature capacity maintenance rate of not less than 75% and less than 80%
C: High-temperature capacity maintenance rate of not less than 70% and less than 75%
D: High-temperature capacity maintenance rate of less than 70%

### (Example 1)

### <Production of positive electrode active material particles>

Positive electrode active material particles formed of LiFePO₄ were produced as follows.

LiOH was used as a Li source, NH₄H₂PO₄ was used as a P source, and FeSO₄·7H₂O was used as an Fe source. These materials were combined with pure water and mixed with a molar ratio of Li:Fe:P = 3: 1:1 to produce 250 mL of a slurry. The slurry was loaded into a pressure-resistant sealed vessel, was heated at 180°C for 9 hours, and was subsequently cooled to 25°C to yield a reaction product. The obtained reaction product was washed with pure water and was subsequently vacuum dried at 80°C for 3 hours to yield positive electrode active material particles formed of LiFePO₄.

### <Production of composite particles>

A bead mill (produced by Fritsch Japan Co., Ltd.; Planetary Bead Mill, Model P-5) in which zirconia balls of 1 mm in diameter were used was used to perform 30 minutes of dispersing treatment of 100 g of the positive electrode active material obtained as described above, 4 g of polyvinyl alcohol as a carbon source, and pure water to yield a slurry for composite particles (slurry production step). The obtained slurry for composite particles was sprayed and dried in a 170°C air atmosphere using a spray dryer so as to perform granulation (granulation step). The resultant granulated particles were subjected to heat treatment in a nitrogen atmosphere under conditions of a heating temperature of 750°C and a heating time of 60 minutes (heating step) to yield composite particles having the positive electrode active material particles covered by a carbon coating. The volume-average particle diameter, amount of coverage of the carbon coating, and D/G ratio of the carbon coating were measured for the obtained composite particles. The results are shown in Table 1.

### <Production of polymer A>

An autoclave equipped with a stirrer was charged with 240 parts of deionized water, 2.5 parts of sodium alkylbenzene sulfonate, 30 parts of acrylonitrile as a nitrile group-containing monomer, 5 parts of methacrylic acid as a carboxy group-containing monomer, and 0.25 parts of t-dodecyl mercaptan as a chain transfer agent in this order, and the inside of a bottle was purged with nitrogen. Thereafter, 65 parts of 1,3-butadiene as a conjugated diene monomer was injected, 0.25 parts of ammonium persulfate was added, and a polymerization reaction was performed at a reaction temperature of 40°C. This yielded a polymer including acrylonitrile units, methacrylic acid units, and 1,3-butadiene units. The polymerization conversion rate was 85%.

The obtained polymer was adjusted to a total solid content concentration of 12% with water, and then 400 mL (total solid content: 48 g) of the resultant solution was loaded into an autoclave equipped with a stirrer that had a capacity of 1 L. Nitrogen gas was passed for 10 minutes so as to remove dissolved oxygen in the solution, and then 75 mg of palladium acetate as a hydrogenation reaction catalyst was dissolved in 180 mL of deionized water to which 4 molar equivalents of nitric acid relative to Pd had been added and was added into the autoclave. After purging the system twice with hydrogen gas, the contents of the autoclave were heated to 50°C in a state in which the pressure was raised to 3 MPa with hydrogen gas, and a hydrogenation reaction (first stage hydrogenation reaction) was carried out for 6 hours.

Next, the autoclave was restored to atmospheric pressure, and then 25 mg of palladium acetate as a hydrogenation reaction catalyst was dissolved in 60 mL of water to which 4 molar equivalents of nitric acid relative to Pd had been added and was further added into the autoclave. After purging the system twice with hydrogen gas, the contents of the autoclave were heated to 50°C in a state in which the pressure was raised to 3 MPa with hydrogen gas, and a hydrogenation reaction (second stage hydrogenation reaction) was carried out for 6 hours to yield a water dispersion of hydrogenated nitrile rubber. An appropriate amount of NMP was added to the obtained water dispersion of hydrogenated nitrile rubber to obtain a mixture. Distillation was subsequently performed under reduced pressure at 90°C so as to remove water and excess NMP from the mixture and yield an NMP solution (solid content concentration: 8%) of a polymer A (hydrogenated nitrile rubber).

### <Production of slurry composition for positive electrode>

A slurry composition for a positive electrode was produced by using a planetary mixer to mix (60 rpm, 30 minutes) 95.8 parts of the composite particles, 0.2 parts (in terms of solid content) of the hydrogenated nitrile rubber as the polymer A, 2.0 parts of polyvinylidene fluoride as a polymer B, 2.0 parts of carbon black (produced by TIMCAL Ltd.; product name: SUPER P Li) as a conductive material, and NMP. Note that the additive amount of NMP was adjusted such that the viscosity of the obtained slurry composition for a positive electrode (measured in accordance with JIS Z8803: 1991 by singlecylinder rotational viscometer; temperature: 25°C; rotation speed: 60 rpm) was within a range of 4,000 mPa·s to 5,000 mPa·s.

### <Production of positive electrode for lithium ion secondary battery>

Aluminum foil of 20 µm in thickness was prepared as a current collector. The slurry composition for a positive electrode obtained as described above was applied onto one side of the aluminum foil by a comma coater such as to have a coating weight after drying of 20 mg/cm², was dried at 90°C for 20 minutes and at 120°C for 20 minutes, and was subsequently heat treated at 60°C for 10 hours to obtain a positive electrode web. This positive electrode web was rolled by roll pressing to produce a sheet-shaped positive electrode including the aluminum foil and a positive electrode mixed material layer of 3.2 g/cm³ in density. The sheet-shaped positive electrode was cut to 48.0 mm in width and 47 cm in length to obtain a positive electrode for a lithium ion secondary battery.

### <Production of negative electrode for lithium ion secondary battery>

A 5 MPa pressure-resistant vessel equipped with a stirrer was charged with 33 parts of 1,3-butadiene as a conjugated diene monomer, 3.5 parts of itaconic acid as a carboxy group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the polymerization reaction to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing a binder for a negative electrode.

A planetary mixer was charged with 48.75 parts of artificial graphite and 48.75 parts of natural graphite as negative electrode active material particles and with 1 part (in terms of solid content) of carboxymethyl cellulose as a thickener. These materials were diluted to a solid content concentration of 60% with deionized water and were then kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode.

The slurry composition for a negative electrode was applied onto the surface of copper foil of 15 µm in thickness serving as a current collector by a comma coater such as to have a coating weight of 10 ± 0.5 mg/cm². The copper foil with the slurry composition for a negative electrode applied thereon was subsequently conveyed inside an oven having a temperature of 80°C for 2 minutes and an oven having a temperature of 110°C for 2 minutes at a speed of 400 mm/min so as to dry the slurry composition on the copper foil and obtain a negative electrode web having a negative electrode mixed material layer formed on the current collector.

This negative electrode web was rolled by roll pressing to produce a sheet-shaped negative electrode including the aluminum foil and a negative electrode mixed material layer of 1.6 g/cm³ in density. The sheet-shaped negative electrode was cut to 50.0 mm in width and 52 cm in length to obtain a negative electrode for a lithium ion secondary battery.

### <Production of lithium ion secondary battery>

The produced positive electrode for a lithium ion secondary battery and negative electrode for a lithium ion secondary battery were wound up using a core of 20 mm in diameter with the respective electrode mixed material layers thereof facing each other and with a separator (microporous membrane made of polyethylene) of 15 µm in thickness interposed therebetween so as to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF₆ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) was prepared as an electrolyte solution.

The compressed roll was subsequently housed inside of a laminate case made of aluminum with 3.2 g of the electrolyte solution. After connecting a nickel lead at a specific site on the negative electrode for a secondary battery and connecting an aluminum lead at a specific site on the positive electrode for a secondary battery, an opening of the case was sealed by heat to obtain a lithium ion secondary battery. The lithium ion secondary battery had a pouch shape of 35 mm in width, 60 mm in height, and 5 mm in thickness, and the nominal capacity of the battery was 700 mAh.

IV resistance, cycle characteristics, and high-temperature storage characteristics were evaluated for the obtained lithium ion secondary battery. The results are shown in Table 1.

### (Examples 2 to 4, 12, and 13)

Positive electrode active material particles, composite particles, a polymer A, a slurry composition for a positive electrode, a positive electrode for a lithium ion secondary battery, a negative electrode for a lithium ion secondary battery, and a lithium ion secondary battery were prepared and various evaluations were performed in the same way as in Example 1 with the exception that the amount of polyvinyl alcohol as a carbon source in the slurry production step during production of the composite particles was changed to 6 g (Example 2), 2.5 g (Example 3), 10 g (Example 4), 1.8 g (Example 12), or 14.5 g (Example 13). The results are shown in Tables 1 and 2.

### (Examples 5 to 8, 14, and 15)

Positive electrode active material particles, composite particles, a polymer A, a slurry composition for a positive electrode, a positive electrode for a lithium ion secondary battery, a negative electrode for a lithium ion secondary battery, and a lithium ion secondary battery were prepared and various evaluations were performed in the same way as in Example 1 with the exception that the heating temperature and the heating time in the heating step during production of the composite particles were changed as indicated below. The results are shown in Tables 1 and 2.

| | |
|---|---|
| Example 5 | Heating temperature: 850°C, Heating time: 20 minutes |
| Example 6 | Heating temperature: 700°C, Heating time: 80 minutes |
| Example 7 | Heating temperature: 850°C, Heating time: 40 minutes |
| Example 8 | Heating temperature: 700°C, Heating time: 60 minutes |
| Example 14 | Heating temperature: 850°C, Heating time: 60 minutes |
| Example 15 | Heating temperature: 700°C, Heating time: 40 minutes |

### (Examples 9 to 11, 16, and 17)

Positive electrode active material particles, composite particles, a polymer A, a slurry composition for a positive electrode, a positive electrode for a lithium ion secondary battery, a negative electrode for a lithium ion secondary battery, and a lithium ion secondary battery were prepared and various evaluations were performed in the same way as in Example 1 with the exception that the amount (in terms of solid content) of hydrogenated nitrile rubber as the polymer A and the amount of composite particles were changed as indicated below in production of the slurry composition for a positive electrode. The results are shown in Tables 1 and 2.

| | |
|---|---|
| Example 9 | Polymer A: 0.4 parts, Composite particles: 95.6 parts |
| Example 10 | Polymer A: 0.1 parts, Composite particles: 95.9 parts |
| Example 11 | Polymer A: 1.0 parts, Composite particles: 95.0 parts |
| Example 16 | Polymer A: 0.05 parts, Composite particles: 95.95 parts |
| Example 17 | Polymer A: 2.0 parts, Composite particles: 94.0 parts |

### (Comparative Examples 1 and 2)

Positive electrode active material particles, composite particles, a polymer A, a slurry composition for a positive electrode, a positive electrode for a lithium ion secondary battery, a negative electrode for a lithium ion secondary battery, and a lithium ion secondary battery were prepared and various evaluations were performed in the same way as in Example 1 with the exception that the amount of polyvinyl alcohol as a carbon source in the slurry production step during production of the composite particles was changed to 1.2 g (Comparative Example 1) or 18 g (Comparative Example 2). The results are shown in Table 2.

### (Comparative Examples 3 and 4)

Positive electrode active material particles, composite particles, a polymer A, a slurry composition for a positive electrode, a positive electrode for a lithium ion secondary battery, a negative electrode for a lithium ion secondary battery, and a lithium ion secondary battery were prepared and various evaluations were performed in the same way as in Example 1 with the exception that the heating temperature and the heating time in the heating step during production of the composite particles were changed as indicated below. The results are shown in Table 2.
Comparative Example 3 Heating temperature: 850°C, Heating time: 90 minutes
Comparative Example 4 Heating temperature: 700°C, Heating time: 20 minutes

### (Comparative Examples 5 and 6)

Positive electrode active material particles, composite particles, a polymer A, a slurry composition for a positive electrode, a positive electrode for a lithium ion secondary battery, a negative electrode for a lithium ion secondary battery, and a lithium ion secondary battery were prepared and various evaluations were performed in the same way as in Example 1 with the exception that the amount (in terms of solid content) of hydrogenated nitrile rubber as the polymer A and the amount of composite particles were changed as indicated below in production of the slurry composition for a positive electrode. The results are shown in Table 2.
Comparative Example 5 Polymer A: 0.03 parts, Composite particles: 95.97 parts
Comparative Example 6 Polymer A: 2.5 parts, Composite particles: 93.5 parts

### (Comparative Example 7)

Positive electrode active material particles, composite particles, a slurry composition for a positive electrode, a positive electrode for a lithium ion secondary battery, a negative electrode for a lithium ion secondary battery, and a lithium ion secondary battery were prepared and various evaluations were performed in the same way as in Example 1 with the exception that the polymer A was not produced and that polyvinylpyrrolidone was used instead of the polymer A in production of the slurry composition for a positive electrode. The results are shown in Table 2.

In Tables 1 and 2, shown below:
"HNBR" indicates hydrogenated nitrile rubber;
"PVDF" indicates polyvinylidene fluoride; and
"PVP" indicates polyvinylpyrrolidone.

**[Table 1]**

| | | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|
| Production of composite particles | | Carbon source | Type | PVA | PVA | PVA | PVA | PVA | PVA | PVA | PVA | PVA | PVA | PVA | PVA |
| | | | Amount [parts by mass] (relative to 100 parts of active material particles) | 4 | 6 | 2.5 | 10 | 4 | 4 | 4 | 4 | 4 | 4 | 4 | 1.8 |
| | | Heat treatment | Heating temperature [°C] | 750 | 750 | 750 | 750 | 850 | 700 | 850 | 700 | 750 | 750 | 750 | 750 |
| | | | Heating time [min] | 60 | 60 | 60 | 60 | 20 | 80 | 40 | 60 | 60 | 60 | 60 | 60 |
| Slurry composition | Composite particles | Carbon coating | Amount of coverage [parts by mass] (relative to 100 parts of active material particles) | 1.0 | 1.4 | 0.6 | 2.3 | 1.0 | 1.0 | 1.0 | 1.0 | 1.0 | 1.0 | 1.0 | 0.4 |
| | | | D/G ratio [-] | 1.0 | 1.0 | 1.0 | 1.0 | 0.8 | 1.2 | 0.7 | 1.5 | 1.0 | 1.0 | 1.0 | 1.0 |
| | | Volume-average particle diameter [µm] | | 1.0 | 1.0 | 1.0 | 1.0 | 1.0 | 1.0 | 1.0 | 1.0 | 1.0 | 1.0 | 1.0 | 1.0 |
| | Polymer A, etc. | Type | | HNBR | HNBR | HNBR | HNBR | HNBR | HNBR | HNBR | HNBR | HNBR | HNBR | HNBR | HNBR |
| | | Proportional content among all solid content [mass%] | | 0.20 | 0.20 | 0.20 | 0.20 | 0.20 | 0.20 | 0.20 | 0.20 | 0.40 | 0.10 | 1.00 | 0.20 |
| IV resistance | | | | A | A | B | B | B | A | B | A | B | B | B | C |
| Cycle characteristics | | | | A | A | B | A | A | B | B | B | A | A | B | C |
| High-temperature storage characteristics | | | | A | B | A | B | A | A | A | B | A | B | A | B |

**[Table 2]**

| | | | | Example 13 | Example 14 | Example 15 | Example 16 | Example 17 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|
| Production of composite particles | | Carbon source | Type | PVA | PVA | PVA | PVA | PVA | PVA | PVA | PVA | PVA | PVA | PVA | PVA |
| | | | Amount [parts by mass] (relative to 100 parts of active material particles) | 14.5 | 4 | 4 | 4 | 4 | 1.2 | 18 | 4 | 4 | 4 | 4 | 4 |
| | | Heat treatment | Heating temperature [°C] | 750 | 850 | 700 | 750 | 750 | 750 | 750 | 850 | 700 | 750 | 750 | 750 |
| | | | Heating time [min] | 60 | 60 | 40 | 60 | 60 | 60 | 60 | 90 | 20 | 60 | 60 | 60 |
| Slurry composition | Composite particles | Carbon coating | Amount of coverage [parts by mass] (relative to 100 parts of active material particles) | 3.3 | 1.0 | 1.0 | 1.0 | 1.0 | 0.3 | 4.0 | 1.0 | 1.0 | 1.0 | 1.0 | 1.0 |
| | | | D/G ratio [-] | 1.0 | 0.6 | 1.7 | 1.0 | 1.0 | 1.0 | 1.0 | 0.2 | 1.9 | 1.0 | 1.0 | 1.0 |
| | | Volume-average particle diameter [µm] | | 1.0 | 1.0 | 1.0 | 1.0 | 1.0 | 1.0 | 1.0 | 1.0 | 1.0 | 1.0 | 1.0 | 1.0 |
| | Polymer A, etc. | Type | | HNBR | HNBR | HNBR | HNBR | HNBR | HNBR | HNBR | HNBR | HNBR | HNBR | HNBR | PVP |
| | | Proportional content among all solid content [mass%] | | 0.20 | 0.20 | 0.20 | 0.05 | 200 | 0.20 | 0.20 | 0.20 | 0.20 | 0.03 | 2.50 | 0.20 |
| IV resistance | | | | C | C | B | C | C | D | D | D | C | D | D | E |
| Cycle characteristics | | | | B | C | C | B | C | D | C | D | D | C | D | D |
| High-temperature storage characteristics | | | | C | B | C | C | B | C | D | C | D | D | C | C |

It can be seen from Tables 1 and 2 that reduction of IV resistance of an electrochemical device and improvement of cycle characteristics and high-temperature storage characteristics of the electrochemical device can be achieved in a good balance in Examples 1 to 17 in which a positive electrode mixed material layer is formed using a slurry composition that contains composite particles including positive electrode active material particles covered with a carbon coating having a specific D/G ratio, a binder including a specific polymer A, and a dispersion medium and in which the amount of the carbon coating covering the positive electrode active material particles in the composite particles is within a specific range and the proportion constituted by the polymer A among all solid content is within a specific range.

### INDUSTRIAL APPLICABILITY

According to the present disclosure, it is possible to provide a slurry composition for an electrochemical device positive electrode that can form a positive electrode that can reduce IV resistance of an electrochemical device while also causing the electrochemical device to display excellent cycle characteristics and high-temperature storage characteristics.

Moreover, according to the present disclosure, it is possible to provide a positive electrode for an electrochemical device that can reduce IV resistance of an electrochemical device while also causing the electrochemical device to display excellent cycle characteristics and high-temperature storage characteristics.

Furthermore, according to the present disclosure, it is possible to provide an electrochemical device having low IV resistance and excellent cycle characteristics and high-temperature storage characteristics.

## Claims

1. A slurry composition for an electrochemical device positive electrode comprising composite particles, a binder, and a dispersion medium, wherein
the composite particles include positive electrode active material particles and a carbon coating that at least partially covers outer surfaces of the positive electrode active material particles,
an amount of the carbon coating included in the composite particles is not less than 0.4 parts by mass and not more than 3.5 parts by mass per 100 parts by mass of the positive electrode active material particles,
the carbon coating has a ratio of D band peak intensity relative to G band peak intensity in a Raman spectrum of not less than 0.6 and not more than 1.7,
the binder includes a polymer A that includes a nitrile group-containing monomer unit and an alkylene structural unit, and
the polymer A constitutes a proportion of not less than 0.05 mass% and not more than 2.0 mass% among all solid content.

2. The slurry composition for an electrochemical device positive electrode according to claim 1, wherein the composite particles have a volume-average particle diameter of less than 20 µm.

3. The slurry composition for an electrochemical device positive electrode according to claim 1 or 2, wherein the composite particles constitute a proportion of not less than 90 mass% and not more than 99 mass% among all solid content.

4. The slurry composition for an electrochemical device positive electrode according to any one of claims 1 to 3, wherein the binder includes a polymer B other than the polymer A.

5. The slurry composition for an electrochemical device positive electrode according to claim 4, wherein the polymer B constitutes a proportion of not less than 0.1 mass% and not more than 5 mass% among all solid content.

6. The slurry composition for an electrochemical device positive electrode according to any one of claims 1 to 5, further comprising a conductive material.

7. The slurry composition for an electrochemical device positive electrode according to claim 6, wherein the conductive material constitutes a proportion of not less than 0.4 mass% and not more than 5 mass% among all solid content.

8. A positive electrode for an electrochemical device comprising a positive electrode mixed material layer formed using the slurry composition for an electrochemical device positive electrode according to any one of claims 1 to 7.

9. An electrochemical device comprising the positive electrode for an electrochemical device according to claim 8.
